(19) **Europäisches Patentamt**

**European Patent Office**

**Office européen des brevets**

(11) Publication number: **0 140 973**
**B1**

(12) **EUROPEAN PATENT SPECIFICATION**

(45) Date of publication of patent specification: **20.04.88**

(21) Application number: **83902289.4**

(22) Date of filing: **21.07.83**

(86) International application number:
**PCT/JP83/00234**

(87) International publication number:
**WO 84/03799 27.09.84 Gazette 84/23**

(51) Int. Cl.⁴: **H 01 M 4/90, H 01 M 4/06,**
**C 01 G 45/02, B 01 J 23/32**

(54) **AIR CELL ELECTRODE AND PROCESS FOR PREPARING ITS CATALYST.**

(30) Priority: **18.03.83 JP 46247/83**

(43) Date of publication of application:
**15.05.85 Bulletin 85/20**

(45) Publication of the grant of the patent:
**20.04.88 Bulletin 88/16**

(84) Designated Contracting States:
**DE FR GB**

(56) References cited:
**JP-A-48 055 333**
**JP-A-53 099 431**

**PATENTS ABSTRACTS OF JAPAN, vol. 7, no.**
**226 (E-202)1371r, October 7, 1983; & JP - A - 58**
**117 648 (MATSUSHITA DENKI SANGYO K.K.)**
**13-07-1983**

The file contains technical information
submitted after the application was filed and
not included in this specification

(73) Proprietor: **Matsushita Electric Industrial Co.,**
**Ltd.**
**1006, Oaza Kadoma**
**Kadoma-shi Osaka-fu, 571 (JP)**

(72) Inventor: **KOSHIBA, Nobuharu**
**47-5, Ichihara, Heguri-cho, Ikoma-gun**
**Nara-ken 636 (JP)**
Inventor: **HAYAKAWA, Hayashi**
**17-9, Kiyotakinakamachi Shijonawate-shi**
**Osaka-fu 575 (JP)**
Inventor: **MOMOSE, Keigo**
**32-26, Higashikori 3-chome Hirakata-shi**
**Osaka-fu 573 (JP)**
Inventor: **OHTA, Akira**
**46-27, Hannancho 1-chome Abeno-ku, Osaka-shi**
**Osaka-fu 545 (JP)**

(74) Representative: **Spencer, Graham Easdale et al**
**A.A. Thornton & CO Northumberland House**
**303-306, High Holborn**
**London WC1V 7LE (GB)**

(58) References cited:

PATENTS ABSTRACTS OF JAPAN, vol. 8, no. 272 (E-284)1709r, December 13, 1984; & JP - A - 59 143 276 (MATSUSHITA DENKI SANGYO K.K.) 16-08-1984

GMELINS HANDBUCH DER ANORGANISCHEN CHEMIE "MANGAN", system no. 56, part C, "Verbindungen" Edition 8, 1973, pages 395,399-401,124-126, Verlag Chemie, Weinheim, DE; HELVETICA CHEMICA ACTA, vol. 50, no. 209, fasciculus 7, 1967; pages 2023-2034; H.R. OSWALD et al.: "Die Kristallstrukturen von Mn5O8 und Cd2Mn3O8"

CHEMICAL ABSTRACTS, vol. 91, no. 18, October 29, 1979, pages 669-670, abstract 150522q, Columbus, Ohio, US; A. AGOPSOWICZ et al.: "Thermal behavior of partially reduced gamma-manganese dioxide in argon atmosphere", & THERMOCHIM. ACTA 1979, 32(1-2), 63-71

CHEMICAL ABSTRACTS, vol. 92, no. 12, March 1980, page 640, abstract 103588b, Columbus, Ohio, US; J.A. LEE et al.: "Thermal decomposition of manganese oxyhydroxide", & J. SOLID STATE CHEM. 1980, 31(1), 81-93

# 0 140 973

## Description

The present invention is concerned with fuel cells and, more particularly, with an air cell having an improved manganese oxide catalyst which provides excellent high rate discharge characteristics and good storage characteristics. The improved manganese oxide catalyst of the invention is particularly suitable for use in air-zinc button cells.

There have been attempts over many years to employ manganese oxide as an inexpensive catalyst for air cell use. For example, U.S. Patents 3948684, 4121018, and 4269691 disclose such catalysts. According to these patents, various types of chemical manganese are subjected to chemical or heat treatment to precipitate $MnO_2$, $Mn_2O_3$ and/or $Mn_3O_4$ on carbon or mix $\gamma MnO_2$ with carbon and alkali to provide a catalyst.

As indicated in the U.S. Patents mentioned above, manganese oxides have catalyst activity and some of them have satisfactory discharge characteristics at a current not exceeding several $mA/cm^2$, but these oxides are not always completely satisfactory in their high-rate discharge characteristics at a current of more than 10 $mA/cm^2$ and in their discharge characteristics after storage. In the light of these drawbacks, there has been a demand for a manganese oxide having improved catalyst activity and improved storage stability.

The present invention is concerned with an improved catalyst for an alkaline air cell, the catalyst comprising a manganese oxide obtained by heat-treating $\gamma$-manganese oxyhydroxide ($\gamma$-MnOOH), particularly a manganese oxide obtained by heat-treating $\gamma$-MnOOH at a temperature in the range 250 to 450°C whose X-ray diffraction pattern is mainly characteristic of $Mn_5O_8$.

According to the present invention, therefore, there is provided an air cell which contains a catalyst comprising a manganese oxide, characterized in that the manganese oxide has an empirical formula of $MnO_x$, where $1.45 \leq x \leq 1.60$, and gives an x-ray diffraction pattern (copper target) having peaks corresponding to lattice constants of 1.59, 1.90, 2.35, 2.48, 2.79, 3.09, 4.09 and 4.88.

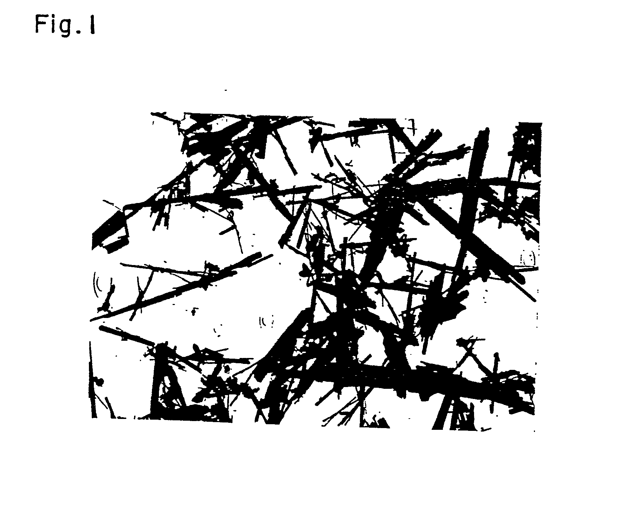

The manganese oxyhydroxide $\gamma$-MnOOH used in the present invention occurs as acicular crystals, as shown in Figure 1, the crystals having a major axis length $a$ of not more than 10 $\mu$, a minor axis length $b$ of not more than 1 $\mu$, and an aspect ratio $a/b$ of <10. This acicular crystalline configuration remains unchanged even after heat treatment.

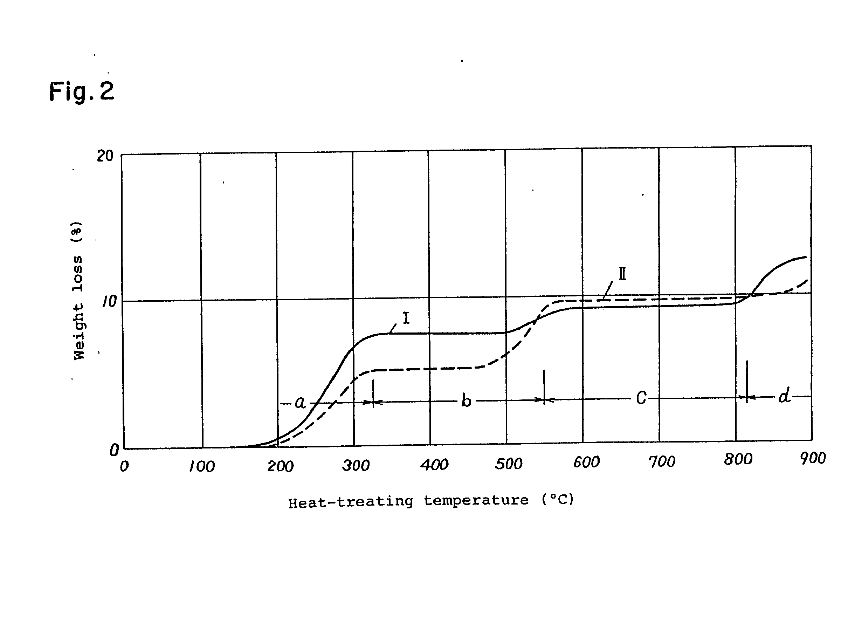

Figure 2 shows the thermogravimetric weight-loss curves of $\gamma$-MnOOH in various atmospheres. The inert atmospheres I of nitrogen, argon and helium gases and the air atmosphere II tend to show substantially the same course of weight change, but in the temperature region indicated by $b$ in Figure 2, the weight changes in the inert atmospheres (I), i.e. nitrogen, argon and helium, are more than that in air (II).

With regard to the X-ray diffraction patterns of the resulting manganese oxides, the results are as follows. When the heat treatment is carried out in nitrogen, argon, or helium at a temperature in the range 250 to 300°C, $Mn_5O_8$ is produced in a substantial amount, but some $\gamma$-MnOOH remains unreacted; a diffraction pattern characteristic of $Mn_5O_8$ and, to a lesser extent, of $Mn_3O_4$ is obtained at a temperature of 450°C, and a pattern characteristic of $\alpha$-$Mn_2O_3$ is obtained at 500°C.

The heat treatment in air shows substantially the same tendency as that in nitrogen or argon, but $Mn_5O_8$ is predominant in the temperature range 250 to 300°C, where the presence of $\beta$-$MnO_2$ in addition to $\gamma$-MnOOH is confirmed by reference to the ASTM Data File.

The studies conducted in the various atmospheres and temperature regions mentioned above showed that although $\gamma$-MnOOH as such has only slight catalytic activity, a very high catalytic activity is obtained under the conditions which lead to an X-ray diffraction pattern characteristic of $Mn_5O_8$ and the storage stability of the product in alkaline electrolyte is also very high.

In the heat-treatment temperature region of 500°C and higher, there occurs a transition to $\alpha$-$Mn_2O_3$ so that although the catalytic activity during initial discharge is satisfactory, the stability of this oxide in the electrolyte is somewhat inferior to that of $Mn_5O_8$.

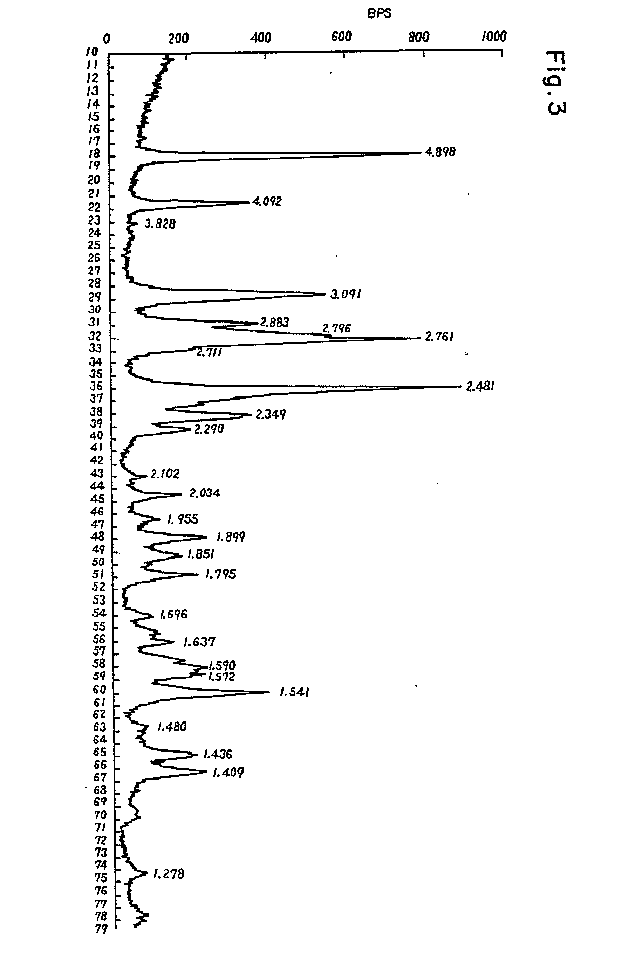

Figure 3 shows a typical X-ray diffraction pattern (copper target, carbon filter, voltage 40 kV, current 40 mA) of $Mn_5O_8$ obtained by heat-treating $\gamma$-MnOOH in a nitrogen atmosphere at a temperature of 400°C for 2 hours. In Figure 3, the horizontal axis represents 2θ and the vertical axis represents the peak intensity.

According to the ASTM Data File, the lattice constant (d) and diffraction peak intensity ($I/I_1$) values of $Mn_5O_8$ are as shown in Table 1.

TABLE 1

| d | 4.88 | 4.09 | 3.10 | 2.80 | 2.47 | 2.34 | 1.90 | 1.59 |
|---|------|------|------|------|------|------|------|------|
| $I/I_1$ | 100 | 40 | 70 | 70 | 50 | 60 | 70 | 50 |

The representative $d$ values in the X-ray diffraction pattern of manganese oxide obtained in accordance with the present invention are shown in Table 2.

3

TABLE 2

| d | 4.88 | 4.09 | 3.09 | 2.79 | 2.76 | 2.48 | 2.35 | 2.03 | 1.90 | 1.59 | 1.54 |
|---|------|------|------|------|------|------|------|------|------|------|------|

It is clear that the manganese oxide of the present invention shares many of the peak positions of $Mn_5O_8$ as given in the ASTM Data File.

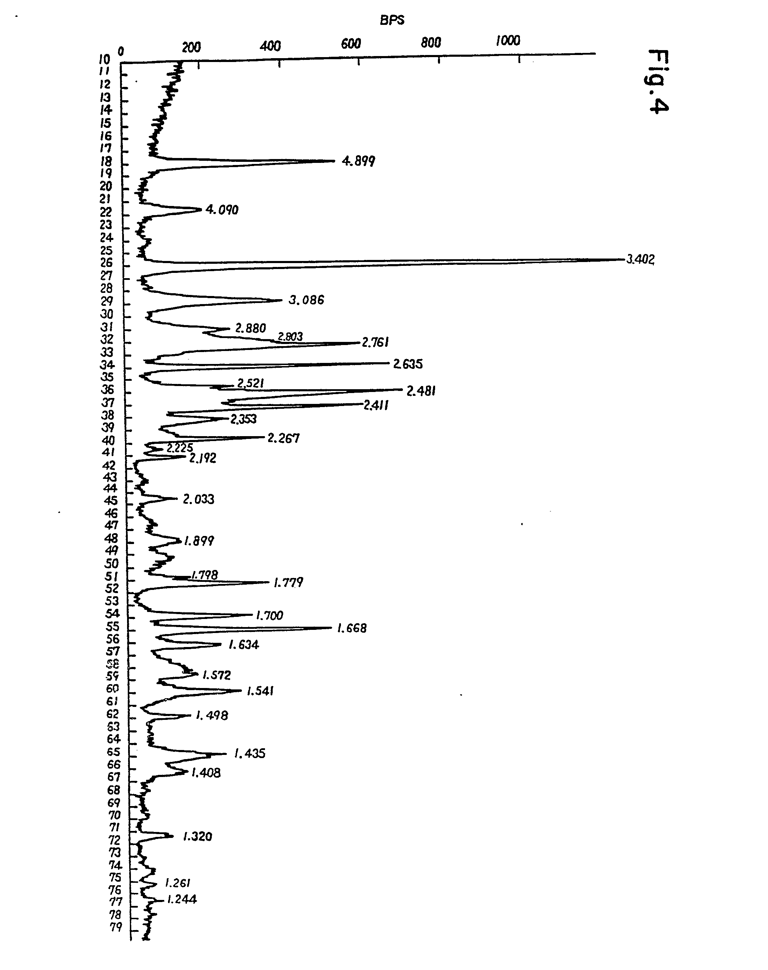

However, since the relative intensities of diffraction peaks may vary according to crystal shape, the conditions of recording the X-ray diffraction pattern, and the heat-treating temperature, the relative intensity values do not necessarily correspond to the values in the ASTM Data File. Figure 4 shows the X-ray diffraction pattern of the manganese oxide obtained by heat treatment at 300°C.

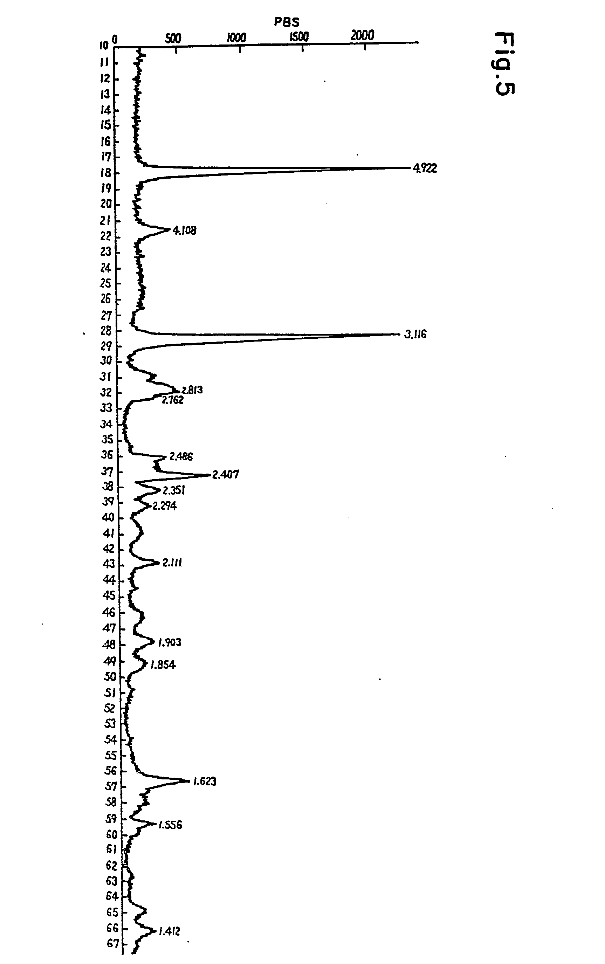

Figure 5 shows the X-ray diffraction pattern of manganese oxide obtained by heat treatment at 450°C.

For the same reasons as mentioned above, diffraction peak positions may be displaced by ± about 0.02.

Chemical analysis of the $MnO_x$ obtained by the heat treatment of $\gamma$-MnOOH showed that the value x=1.6 corresponding to $Mn_5O_8$ is not necessarily obtained even when the heat treatment is conducted at a temperature of 400°C. Rather, the value of x is less than 1.6 in many cases.

The chemical analysis for the determination of x was carried out as follows. First, $MnO_x$ was dissolved in known quantities of oxalic acid and sulphuric acid and the unreacted oxalic acid was titrated with potassium permanganate to determine the proportion of $MnO_2$. The $MnO_x$ was also dissolved in hydrochloric acid and titrated with EDTA to find the proportion of metallic manganese. From these data, the value of x in the $MnO_x$ was calculated using the following equation:

$$x = \frac{\dfrac{a}{86.938}}{\dfrac{b}{54.938}} + 1$$

where

a = weight percent of $MnO_2$

b = weight percent of Mn

The value of x for the $MnO_x$ of the present invention as calculated by the above method was found to satisfy the condition $1.45 \leq x \leq 1.60$ when the heat-treating temperature was 250°C or higher, regardless or the atmosphere in which the $\gamma$-MnOOH was heated. This indicates that while the manganese oxide obtained by heat-treating $\gamma$-MnOOH shows many of the characteristics of $Mn_5O_8$ according to the ASTM Data File, not only $Mn_5O_8$ but other special manganese oxides close to $Mn_5O_8$ are formed as well.

As indicated earlier, the manganese oxide obtained by the method of the invention is in the form of acute acicular crystals and has the characteristics of $Mn_5O_8$ in its X-ray diffraction pattern.

Using the manganese oxide of the invention, a catalyst electrode can be manufactured in the following manner.

The manganese oxide of the invention is mixed with activated carbon, carbon black, and an aqueous fluorine-containing resin dispersion to form a paste, which is then coated over a screen of stainless steel, silver, or similar material. The sheet obtained is then dried and heat-treated at a temperature of about 300°C in order to slightly sinter the fluorine-containing resin. In this case, the fluorine-containing resin acts as a binder and a repellent against alkaline electrolyte, etc. The activated carbon serves as a catalyst support, but since it is low in electrical conductivity, carbon black is also added. In some cases, carbon black alone can be used as a catalyst support instead of activated carbon. A catalyst electrode of wafer thickness, for example less than 0.2 mm, can be prepared in this way.

In order that the invention may be more fully understood, reference will be made in the following description to the accompanying drawings, in which:

Figure 1 is a transmission electron microphotograph showing the crystallographic structure of $\gamma$-manganese oxyhydroxide according to this invention at a magnification of ×10,000;

Figure 2 is a thermogravimetric weight-change curve for the $\gamma$-manganese oxyhydroxide shown in Figure 1;

Figures 3, 4 and 5 show the X-ray diffraction patterns (copper target) of $\gamma$-manganese oxyhydroxides obtained by heat-treatment at temperatures of 400°C, 300°C and 450°C, respectively;

Figure 6 is a cross-sectional view showing an air-zinc button cell according to the present invention;

Figure 7 shows the average retention voltages in continuous discharge at a temperature of 20°C and a load resistance of 130 Ω for air-zinc button cells prepared using catalyst electrodes obtained by heat-treating $\gamma$-manganese oxyhydroxide in an atmosphere of air (A), nitrogen (B) or argon (C) at various temperatures; and

Figure 8 shows the X-ray diffraction pattern of manganese oxide in accordance with the present invention after storage.

For a better understanding of the invention, the following examples are provided by way of illustration.

Example 1

30 parts by weight of the manganese oxide obtained by heat-treating $\gamma$-MnOOH was mixed with 20 parts by weight of activated carbon, 20 parts by weight of carbon black, 30 parts by weight (as non-volatile matter) of an aqueous dispersion of polyethylene tetrafluoride, and 100 parts by weight of distilled matter. The mixture was kneaded well and rolled to give a 0.5 mm thick sheet. The sheet was filled into a nickel screen with a wire diameter of 0.1 mm and a mesh size of 40 meshes, dried, and pressed to give a catalyst sheet having a thickness of 0.4 mm. The catalyst sheet was heat-treated at 300°C for 15 minutes to sinter the polyethylene tetrafluoride component for increased water repellency. The sintered catalyst sheet was then punched to give an air-zinc button cell catalyst electrode having a diameter of 11.0 mm. The diameter of the effective area of this catalyst electrode was 9.0 mm. The sheet electrode was laminated with a 0.2 mm-thick porous polyethylene tetrafluoride film of the same diameter to render the sheet gas-permeable, but liquid-impermeable. The catalyst electrode was then assembled as follows to provide an air button cell.

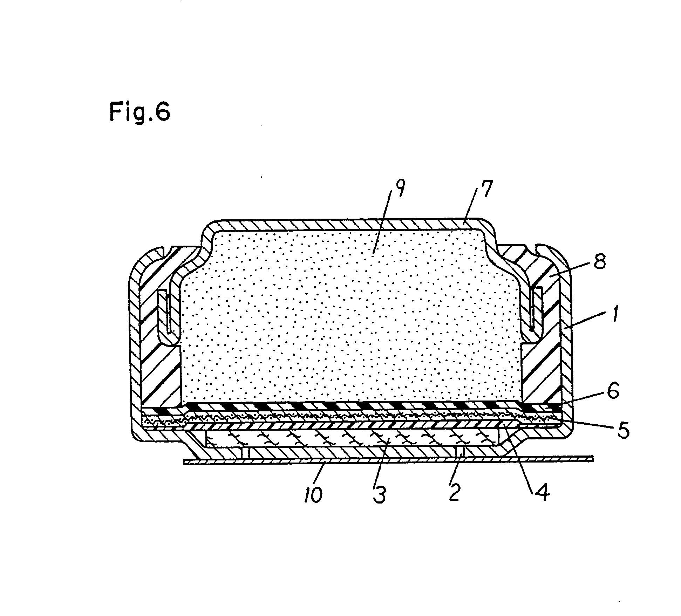

Referring to Figure 6, an air diffusion pad 3 was first set in position on the inside bottom of a positive electrode case 1 having air access holes 2 through the bottom, and the catalyst electrode 5 laminated with polyethylene tetrafluoride film 4 was set in position, followed by the insertion of a separator 6.

A metal-clad seal plate shaped in the form of a dish 7 was then assembled with a seal ring 8 of synthetic resin to provide a sealing assembly. This sealing assembly was filled with zinc powder as a negative electrode active material 9 and an alkaline electrolyte.

The sealing assembly containing the negative electrode was fitted with the above positive electrode case containing the positive electrode and other members, and the whole assembly was sealed tightly with a metal mould to give a leak-tight air-zinc button cell, as shown in Figure 6. The numeral 10 represents a seal paper for closing the air access holes 2 which is peeled off to expose the holes 2 when the button cell is used.

Example 2

$\gamma$-MnOOH was heat-treated in air for about 3 hours at temperature increasing in increments of 50°C from 200 to 700°C to give a series of manganese oxides. Each of these manganese oxides (30 parts by weight) was then kneaded with 20 parts by weight of activated carbon, 20 parts by weight of carbon black, and 30 parts by weight (as non-volatile matter) of an aqueous dispersion of polyethylene tetrafluoride. The mixture was then filled into a metal screen with a wire diameter of 0.1 mm and a mesh size of 40 meshes to give a 0.5 mm thick catalyst sheet. The sheet was heat-treated at 300°C for 20 minutes to sinter the polyethylene tetrafluoride component for added water repellency and then punched to give a catalyst electrode with a diameter of 11.0 mm. The effective diameter of the electrode was 9.0 mm. The electrode was laminated with a 0.2 mm thick porous polyethylene tetrafluoride film to provide an air cell electrode.

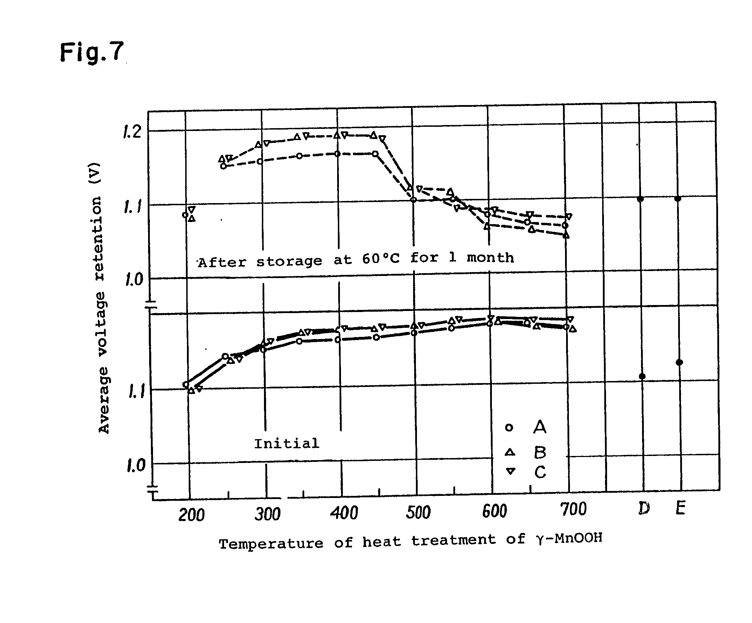

Using this air cell electrode as a positive electrode, zinc as a negative electrode, and an aqueous solution of potassium hydroxide as an electrolyte, an air cell was made by placing the positive and negative electrodes in juxtaposition with a microporous resin separator between them to provide an air-zinc button cell with a diameter of 11.6 mm and a total height of 5.4 mm (IEC Standard Size R44), as shown in Figure 6. In the order of decreasing temperatures for the heat treatment of the $\gamma$-MnOOH, these cells were designated $A_1$ through $A_{11}$ and the average discharge voltages at a temperature of 20°C and a load resistance of 130 $\Omega$ were measured, both immediatley after manufacture and after storage at 60°C for 1 month. The results are indicated by the symbol O in Figure 7.

Example 3

$\gamma$-MnOOH was heat-treated in nitrogen for about 3 hours at temperatures increasing in increments of 50°C from 200 to 700°C to give a number of manganese oxides; using these manganese oxides, air cells were made by the method described in Example 1. These cells were designated $D_1$ through $D_{11}$ and evaluated in the same way as those of Example 1. The results are indicated by the symbol $\Delta$ in Figure 7.

Example 4

$\gamma$-MnOOH was heat-treated in argon by the method described in Examples 1 and 2 and air cells $C_1$ through $C_{11}$ were made using the resulting catalysts and evaluated. The results are indicated by the symbol $\nabla$ in Figure 7.

Control Example

As a control run, untreated $\gamma$-MnOOH was mixed with activated carbon, carbon black, and an aqueous dispersion of polyethylene tetrafluoride in the same proportions as were used in Example 1 and the resulting catalyst was used to make an air cell by the method described in Example 1: the cell was designated D. Similarly, a control cell E was made using $\beta$-MnO$_2$ obtained by the pyrolysis of manganese nitrate by the method described above. The cells D and E were evaluated by the method described in Examples 1, 2 and 3. The results are also shown in Figure 7.

# 0 140 973

It can be seen from Figure 7 that regardless of whether the heat-treating atmosphere is air (O), nitrogen ($\triangle$), or argon ($\nabla$), the initial characteristics of the cells obtained are superior to those of the conventional cells D and E when the heat-treating temperatures are in the range 250 to 700°C, but after 1 month's storage at 60°C, the cells obtained at heat-treating temperatures in the range 250 to 450°C proved more satisfactory for all the atmospheres and, in particular, post-storage characteristics approximately the same as those of the initial characteristics were obtained when the heat-treating temperature was in the range 300 to 400°C. There was no difference between using nitrogen or argon atmospheres, and in both cases the retention voltage was higher than the initial level, and slightly higher than that obtained using air as the heat-treating atmosphere and a heat treatment temperature in the range 300 to 400°C.

The temperature region conducive to such superior characteristics is the region which gives rise to a manganese oxide having many peak positions in its X-ray diffraction pattern which agree with those of $Mn_5O_8$. It is therefore clear that those catalysts whose X-ray diffraction peaks correspond more or less in those of $Mn_5O_8$ have satisfactory catalyst activity and are stable in alkaline electrolyte.

Furthermore, since the manganese oxide obtained by the heat treatment of the invention is in the form of acute needles, it is effectively brought into contact and interlaced with the activated carbon, carbon black, fluorine-containing resin, and metal screen which together form the catalyst electrode. The parameters of water repellency, hydrophilicity and electrical conductivity all operating in a single crystal domain appears to exert a favourable influence on the catalytic activity and storage stability of the cell.

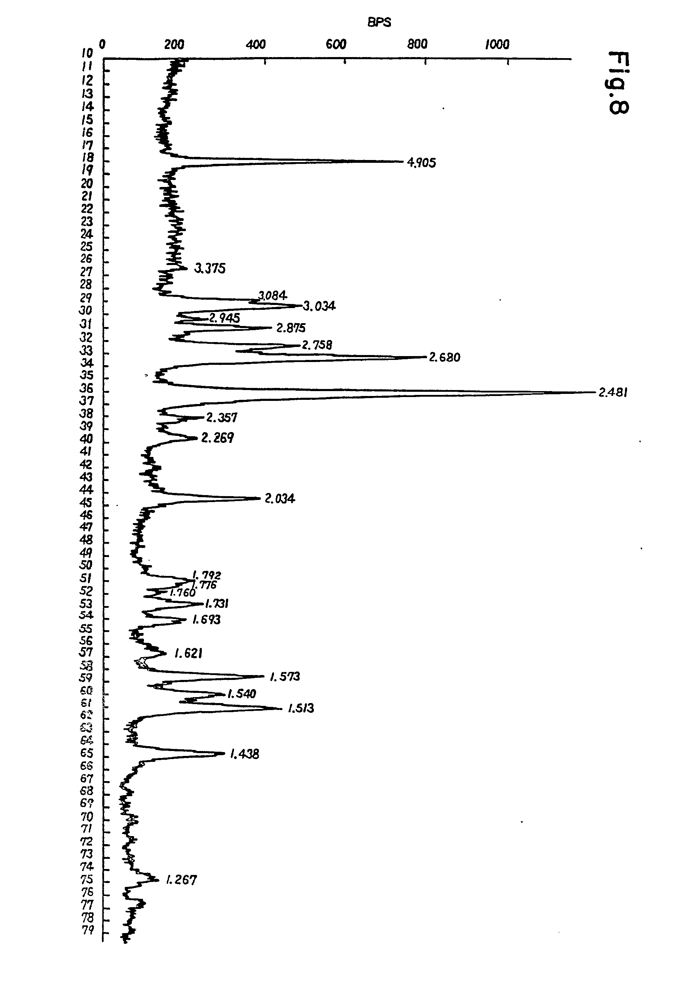

Although the manganese oxide obtained by heat-treating γ-MnOOH shows stable catalytic characteristics even after prolonged storage, its X-ray diffraction pattern after storage is not necessarily identical with the initial pattern, but may change as shown in Figure 8. This is because the manganese oxide is further stabilized in alkaline medium.

Thus, an air cell having a catalyst electrode employing the manganese oxide of the present invention has a high retention voltage at high-rate discharge and has excellent storage characteristics compared with cells employing conventional manganese oxide or manganese oxyhydroxide as the catalyst.

## Claims

1. An air cell which contains a catalyst comprising a manganese oxide, characterised in that the manganese oxide has an empirical formula of $MnO_x$, where $1.45 \leq x \leq 1.60$, and gives an X-ray diffraction pattern (copper target) having peaks corresponding to lattice constants of 1.59, 1.90, 2.35, 2.48, 2.79, 3.09, 4.09 and 4.88.

2. An air cell according to claim 1, in which the manganese oxide gives an X-ray diffraction pattern as shown in Figure 4 of the drawings.

3. An air cell according to claim 1, in which the manganese oxide gives an X-ray diffraction pattern as shown in Figure 5 of the drawings.

4. An air cell according to any of claims 1 to 3, in which the manganese oxide is present in the form of acicular crystals.

5. An air cell according to any of claims 1 to 4, in which the catalyst further comprises activated carbon, carbon black, and a fluorine-containing resin.

6. An air cell according to any of claims 1 to 4, in which the catalyst further comprises carbon black and a fluorine-containing resin.

## Patentansprüche

1. Luftzelle, die einen Manganoxid umfassenden Katalysator enthält, dadurch gekennzeichnet, daß das Manganoxid die empirische formel $MnO_x$ besitzt, worin $1,45 \leq x \leq 1,60$, und ein Röntgenbeugungsmuster (Kupfer-Target) ergibt, das Peaks besitzt, die den Gitterkonstanten 1,59, 1,90, 2,35, 2,48, 2,79, 3,09, 4,09 und 4,88 entsprechen.

2. Luftzelle nach Anspruch 1, wobei das Manganoxid ein Rontgenbeugungsmuster ergibt, wie in Fig. 4 der Zeichnungen gezeigt.

3. Luftzelle nach Anspruch 1, wobei das Manganoxid ein Röntgenbeugungsmuster ergibt, wie in Fig. 5 der Zeichnungen gezeigt.

4. Luftzelle nach einem der Ansprüche 1 bis 3, wobei das Manganoxid in Form nadelförmiger Kristalle vorliegt.

5. Luftzelle nach einem der Ansprüche 1 bis 4, wobei der Katalysator weiterhin Aktivkohle, Ruß und ein Fluor enthaltendes Harz umfaßt.

6. Luftzelle nach einem der Ansprüche 1 bis 4, wobei der Katalysator weiterhin Ruß und ein Fluor enthaltendes Harz umfaßt.

## Revendications

1. Une pile à dépolarisation par l'air qui contient un catalyseur comprenant un oxyde de manganèse, caractérisée en ce que l'oxyde de manganèse a une formule empirique de $MnO_x$, dans laquelle

**0 140 973**

$1,45 \leqslant x \leqslant 1,60$, et donne un spectre de diffraction des rayons X (cible en cuivre) ayant des pics correspondant aux constantes de réseau de 1,59, 1,90, 2,35, 2,48, 2,79, 3,09, 4,09 et 4,88.

2. Une pile à dépolarisation par l'air selon la revendication 1, dans laquelle l'oxyde de manganèse donne un spectre de diffraction des rayons X montré sur la figure 4 des dessins.

3. Une pile à dépolarisation par l'air selon la revendication 1, dans laquelle l'oxyde de manganèse donne un spectre des rayons X montré sur la figure 5 des dessins.

4. Une pile à dépolarisation par l'air selon l'une quelconque des revendications 1 à 3, dans laquelle l'oxyde de manganèse est présent sous la forme de cristaux aciculaires.

5. Une pile à dépolarisation par l'air selon l'une quelconque des revendications 1 à 4, dans laquelle le catalyseur comprend en outre du charbon actif, du noir de carbone et une résine contenant du fluor.

6. Une pile à dépolarisation par l'air selon l'une quelconque des revendications 1 à 4, dans laquelle le catalyseur comprend en outre du noir de carbone et une résine contenant du fluor.

7

Fig. I

Fig. 2

Fig. 3

**0  140  973**

Fig.4

0 140 973

Fig.5

PBS

0   500   1000   1500   2000

4.922
4.108
3.116
2.813
2.762
2.486
2.407
2.351
2.294
2.111
1.903
1.854
1.623
1.556
1.412

5

## Fig.6

Fig.7

After storage at 60°C for 1 month

Initial

|   | |
|---|---|
| o | A |
| △ | B |
| ▽ | C |

Average voltage retention (V)

Temperature of heat treatment of γ-MnOOH

0 140 973

Fig.8

BPS

0    200    400    600    800    1000

4.905

3.375

3.084
3.034
2.945
2.875
2.758
2.680

2.481

2.357
2.269

2.034

1.792
1.776
1.760
1.731
1.693

1.621

1.573
1.540
1.513

1.438

1.267